# EUROPÄISCHE PATENTANMELDUNG

(11) **EP 1 900 278 A1**
(43) Veröffentlichungstag der Anmeldung: **19.03.2008**
(21) Anmeldenummer: 07016703.6
(22) Anmeldetag: 25.08.2007
(51) Int. Cl.: A01K 29/00

(54) **Überwachungseinrichtung und Überwachungsverfahren für Tiere**

(30) Priorität: 14.09.2006 DE 102006044037
(71) Anmelder: Hölscher & Leuschner GmbH & Co., 48488 Emsbüren (DE)
(72) Erfinder: Leuschner, Peter, 48488 Emsbüren (DE)
(74) Vertreter: Bünemann, Egon

(57) **Zusammenfassung**

Überwachungseinrichtung für Tiere, insbesondere Nutztiere, mit einem ein einzelnes Tier (1) erfassenden und mit einer Bildauswertung (4,7) verbundenen opto-elektronischen Überwachungsgerät (2,3), wird zur arbeitssparenden laufenden Überwachung der Tiere, zur Beurteilung des Fütterungserfolgs, zur ständigen Gesundheitskontrolle und/oder zur Überwachung des Konditionsstands in der Weise gestaltet, daß das Überwachungsgerät (2,3) zumindest ein vorgegebenes Oberflächenmerkmal (14,15,16) des Tieres (1) erfaßt, das in der Bildauswertung bewertet wird (Fig. 1).

## Beschreibung

Die Erfindung betrifft eine Überwachungseinrichtung nach dem Oberbegriff des Anspruchs 1 sowie ein Überwachungsverfahren nach dem Oberbegriff des Anspruchs 12.

Überwachungseinrichtungen und -verfahren haben insbesondere in der Nutztierhaltung mit unterschiedlichen Zielsetzungen Einzug gehalten. Eine bekannte opto-elektronische Erfassung bei Mastschweinen dient beispielsweise dazu, maßgebliche Umfangskonturen bzw. Maße des Körpers von oben zu erfassen und hinsichtlich des Mastbedarfs bzw. der Schlachtreife zu bewerten. Ein solches Verfahren ist beispielsweise in der DE 102 39 674 A1 beschrieben.

Die Nutztierhaltung hat aber darüber hinaus einen vielfältigen Überwachungsbedarf, der sich keineswegs auf Schweine beschränkt. Überwachungseinrichtungen zielen insbesondere darauf ab, die laufenden und zeitaufwendigen Konditionskontrollen der Tiere durch das "Auge des Betreibers" durch arbeits- und zeitsparende Überwachungseinrichtungen und Überwachungsverfahren zu ergänzen und zu ersetzen. Solche Überwachungseinrichtungen und -verfahren sind beispielsweise bei der Aufzucht und Mast von Zuchttieren zur Beurteilung des Fütterungserfolges, zur ständigen Gesundheitskontrolle der Tiere wie auch insbesondere zur Überwachung des Konditionsstandes von tragenden Tieren und Muttertieren von Interesse.

Gemäß der Erfindung wird diese Aufgabe durch eine Überwachungseinrichtung nach dem Anspruch 1 sowie durch ein Überwachungsverfahren nach dem Anspruch 12 gelöst.

Es hat sich gezeigt, daß eine opto-elektronische Überwachung keineswegs darauf beschränkt sein sollte, etwa den Umriß eines Tieres anhand von vorgegebenen Meßpunkten zu erfassen und danach Auswerteergebnis für die Frage der Weitermast bzw. einer Vermarktungsreife zu ermitteln. Vielmehr ist es mit opto-elektronischen Mitteln möglich, die Oberfläche oder Oberflächenbereiche des Tieres zu erfassen und anhand vorgegebener Oberflächenmerkmale auszuwerten.

Eine solche Auswertung kann sich dabei auf Oberflächenpartien der Tiere, etwa von Hautpartien bei Schweinen, beziehen, bei denen Abweichungen von vorgegebenen Farben, Strukturen und sonstigen Merkmalen erfaßt und in der Bildauswertung zur Frage mangelhafter Kondition, Krankheit oder Verletzung festgestellt und bedarfsweise angezeigt, zur Steuerung von Stalleinrichtung ausgegeben und/oder gespeichert werden.

Ebenso eignen sich markante Körperpartien zur opto-elektronischen Überwachung von Tieren. Der Kopf eines Tieres mit Schnauze, Nase, Augen und Ohren läßt sich verläßlich und aussagekräftig auf opto-elektronischem Wege hinsichtlich Verfärbungen, Schwellungen, Verletzungen, Schleimabsonderungen und dgl. überwachen.

Weiterhin eignet sich der hintere Körperbereich verschiedener Nutztiere mit den jeweiligen Körperöffnungen gut zur opto-elektronischen Überwachung. Schwellungen der Körperöffnungen, Rötungen, Kot- oder Schleimaustritte, Verschmutzungen und dgl. sind für den Fachmann besonders indikativ und optisch gut erfaßbar sowie elektronisch auswertbar. Krankheitsanzeichen können auf diese Weise automatisch erlangt und ausgegeben werden. Es ist aber auch insbesondere für den Züchter von Interesse, nicht nur beim Austragen wichtige Krankheits- oder Abortanzeichen zu erlangen, sondern zuvor etwa die Empfängnisbereitschaft eines Muttertiers rechtzeitig und verläßlich zu erkennen und zum Ende der Tragzeit Hinweise auf eine bevorstehende Niederkunft zu erhalten. Überwachungen dieser Art von vorn oder hinten sind auch bei felltragenden Tieren gut anzuwenden.

So kann bei Pferden eine automatische Überwachung durch eine automatische opto-elektronische Überwachung des Hinterteils einer hochträchtigen Stute eine Meldung für den Beginn der Geburt gewonnen werden, ohne daß dabei eine für Stuten vielfach störende Anwesenheit eines Menschen erforderlich wäre und insbesondere auch zeitaufwendige Stallwachen entfallen können.

Auch bei tragenden Sauen ist eine gezielte Überwachung der hinteren Körperöffnungen zweckmäßig, einerseits Krankheitsanzeichen mit Hilfe der Bildauswertung zu erlangen, kranke Tiere behandeln und aussondern zu können, bei Totgeburten ein neues Belegen vorzusehen und insbesondere auch bei der weitgehend vorgeschriebenen Gruppenhaltung auch für tragende Sauen eine Ankündigung für den Wurf zu erhalten.

Bei einer opto-elektronischen Überwachung sind die Konturen und Körperöffnungen des Kopfes geeignet, eine reproduzierbare Abbildung herzustellen. Entsprechendes gilt auch beispielsweise für das Hinterteil eines Tieres mit Körperöffnungen und konturbildenden Körperteilen einschl. des Schwanzes. Die Bildauswertung ist damit in der Lage, mit dem von einen einzelnen Tier gewonnenen Bild eine Normierung zum Ausgleich von Differenzen in Abstand und Betrachtungswinkel auszuführen und charakteristische Kenn-, Meß- oder Farbwerte mit vorgegebenen gespeicherten Soll- oder Grenzwerten zu vergleichen. Damit lassen sich bei der Auswertung erhaltene Werte, etwa Schwellungen oder Aufweitung von Körperöffnungen oder auch Farbveränderungen und Verletzungen erfassen.

In besonderem Maße ist allerdings ein Vergleich des gewonnenen Bildes mit einem zuvor von dem gleichen Tier gewonnenen Bild in der Bildauswertung von Interesse.

Die laufende Überwachung ist dann darauf ausgerichtet, Veränderungen zu erkennen und zu melden.

Eine Bilderfolge kann dazu dienen, der Bildauswertung redundantes Material zur Verfügung zu stellen und Zufallseinflüsse und Störungen zu eliminieren. Eine Bilderfolge kann aber auch Verhaltensstörungen und Bewegungsstörungen aufzeigen.

Ein Tier kann dann zur Überwachung durch eine bewegliche - motorisch oder von Hand geführte - oder stationäre Kamera aufgenommen werden, wobei die Position des Tieres zur Kamera nur in einer Grundausrichtung vorzuliegen braucht. In dieser Hinsicht eignen sich nicht nur besondere Schleusen oder Durchgänge oder Futterplätze mit bzw. ohne Trenngitter, sondern auch ggf. in einem Stall gewohnheitsmäßig eingenommene Plätze, um Aufnahmen zu erstellen, die erforderlichenfalls durch Bildbearbeitung zur Bildauswertung vorbereitet werden, indem bestimmte Grundabstände charakteristischer Merkmale durch Vergrößerung oder Verkleinerung angepaßt werden. Ebenso sind Abstandsmessungen zwischen Kamera und Tieroberfläche geeignet, die Größenverhältnisse auf dem Bild zu normieren. Dies erlaubt es, bei der Bildauswertung objektive Meßwerte zu gewinnen, die mit vorgegebenen Werten zu vergleichen sind. Ebenso beseitigt eine solche Bildbearbeitung Veränderungen gegenüber vorangehenden Aufnahmen auszuräumen, die nur aufnahmebedingt sind. Die Bildauswertung kann aber auch - ggf. ohne vorherige Bildbearbeitung - Farbveränderungen, Verschmutzungen, Schleimaustritte oder Abortreste wahrnehmen.

Entsprechende Auswertergebnisse sind dann geeignet, akute Meldungen herauszugeben, die insbesondere bei Verletzung, Krankheit oder Beginn einer Niederkunft für den Tierhalter wichtig sind. Die Meßergebnisse sind aber auch geeignet, ein Tier erforderlichenfalls zu separieren oder im Rahmen dazu vorgesehener Fütterungsprogramme mit einer geeigneten individuellen Fütterung zu versehen, die selbsttätig durch Einspeisung von Werten aus der Bildauswertung in einen Fütterungscomputer erfolgen kann.

Generell und nicht nur bei der Bildauswertung durch Vergleich mit vorangehenden Abbildungen des gleichen Tieres ist eine Identifikation von Interesse. Dies kann grundsätzlich auch im Rahmen einer opto-elektronischen Überwachung erfolgen, insbesondere wenn die Tiere entsprechende Kennungen aufweisen. In dieser Hinsicht können aber beliebige gut eingeführte und erprobte Erkennungssysteme einschl. Markierungen zur elektromagnetischen Erkennungen verwandt werden.

Eine selbsttätig durchführbare Überwachung der Tiere dieser Art ist dann, insbesondere auch in Verbindung mit der Identitätskontrolle, geeignet, an andere, inzwischen auch hochentwickelte und großenteils automatisierte Systeme zur Prozeßsteuerung für das Futter, zur Konditionierung über die Fütterung, zur Lüftungsregelung in den Ställen und zur generellen Dokumentation gekoppelt zu werden.

Drei Ausführungsbeispiele der Erfindung sind in der Zeichnung dargestellt und werden nachfolgend näher beschrieben. In der Zeichnung zeigen:
- Fig. 1: eine erste Überwachungseinrichtung (schematisch), von hinten ausgerichtet auf eine Sau,
- Fig. 2: ein zweites Ausführungsbeispiel einer Überwachungseinrichtung,
- Fig. 3: schematisierte Ansicht einer Sau in einer Schleuse und Bildausschnitt mit Oberflächenmerkmalen am Hinterteil.

Eine in der Zeichnung jeweils mit 1 bezeichnete Sau in einem Zuchtbetrieb macht zur effektiven und gesunden Tierhaltung und Fütterungskontrolle wie auch zur Steuerung des Belegens, zur Wahrnehmung von Aborten und zur zeitgerechten Wahrnehmung des Abferkelns eine aufwendige Kontrolle nötig, die weitestgehend bisher der Beobachtung durch den Züchter oblag. Zur Entlastung der Beteiligten ist hier eine opto-elektronische Überwachung eingerichtet, die es ermöglicht, die Überwachung in beliebig engen Zeitfolgen "rund um die Uhr" durchzuführen und dabei Fehler, die durch menschliche Unachtsamkeit eintreten können, weitgehend zu reduzieren sowie sich aus der Überwachung ergebende Entscheidungen zu objektivieren und zu dokumentieren.

In dieser Hinsicht kann zunächst (auch) eine Vermessungskamera 2 eingesetzt werden, wie sie der DE 102 39 674 A1, dort mit einer insbesondere zur Feststellung der Vermarktungsreife dienenden Bildauswertung, bereits bekannt ist. Eine solche Vermessungskamera mit dazu eingerichteter Bildauswertung der äußeren Körperabmessungen und -konturen kann auch für eine weitergehende Überwachung der Tierkonditionen miteingesetzt werden.

Grundsätzlich verschieden davon ist eine Überwachungseinrichtung mit einer Kamera 3 als opto-elektronischem Überwachungsgerät, das vorgegebene Oberflächenmerkmale erfaßt. Solche Oberflächenmerkmale können grundsätzlich unterschiedlicher Art sein, soweit sie für die Auswertung von Bedeutung sein können. Es können in diesem Sinne Hautpartien hinsichtlich Verletzung oder Verfärbung überwacht werden. Ebenso können Teile des Kopfes insbesondere mit markanten Körperöffnungen wie Mund, Nase und Augen und Kopfteilen wie etwa Ohren überwacht werden. Im vorliegenden Fall wird bei der Überwachung von Sauen das mit Körperöffnungen versehene Hinterteil des Tieres überwacht. Damit können im allgemeinen Krankheitsanzeichen wie Kotverschmutzungen im Afterbereich oder eitriger oder blutiger Ausfluß an der Vulva erkannt werden. Es können Aborte bei zuvor trächtigen Sauen anhand von Blut- und Schleimspuren detektiert werden, die dann Anlaß geben, die Sau einer Neubelegung zuzuführen. Ebenso können anhand von Rötungen und Schwellungen Umrauscherkontrollen durchgeführt werden und insbesondere läßt sich der Beginn des Abferkelvorgangs bei trächtigen Sauen rechtzeitig und selbsttätig erkennen.

Dazu ist die Kamera 3 mit einer programmierbaren Bildauswertung 4 verbunden, die die jeweils von der Kamera empfangenen Bilddaten aufarbeitet und auswertet. In Bezug auf die Aufarbeitung können Bildfehler oder Bildveränderungen, die lediglich aufgrund wechselnden Abstandes oder Bildwinkel zwischen Kamera 3 und Sau 1 beruhen, korrigiert werden, um dann der eigentlichen Bildauswertung vorgegebene Bildpartien, insbesondere markante Bildpunkte, die durch Körperöffnungen und den Schwanz gegeben sind, zu erfassen und auszuwerten. Verschmutzungen oder Ausscheidungen im Bereich der Körperöffnungen werden damit detektierbar, ebenso Verletzungen in diesem Bereich oder auch am Schwanz. Dabei ist auch eine Überwachung farblicher Art hinsichtlich evtl. Rötungen, feuchtigkeitsbedingter Glanzeffekte oder verschmutzungsbedingter Fleckenpartien möglich. Die Ergebnisse der Bildauswertung sind beispielsweise einem Bildschirmgerät 5 als Monitor zuzuführen, können aber auch zu Alarmgebern oder zu einem Fütterungscomputer für die Fütterungssteuerung geführt werden.

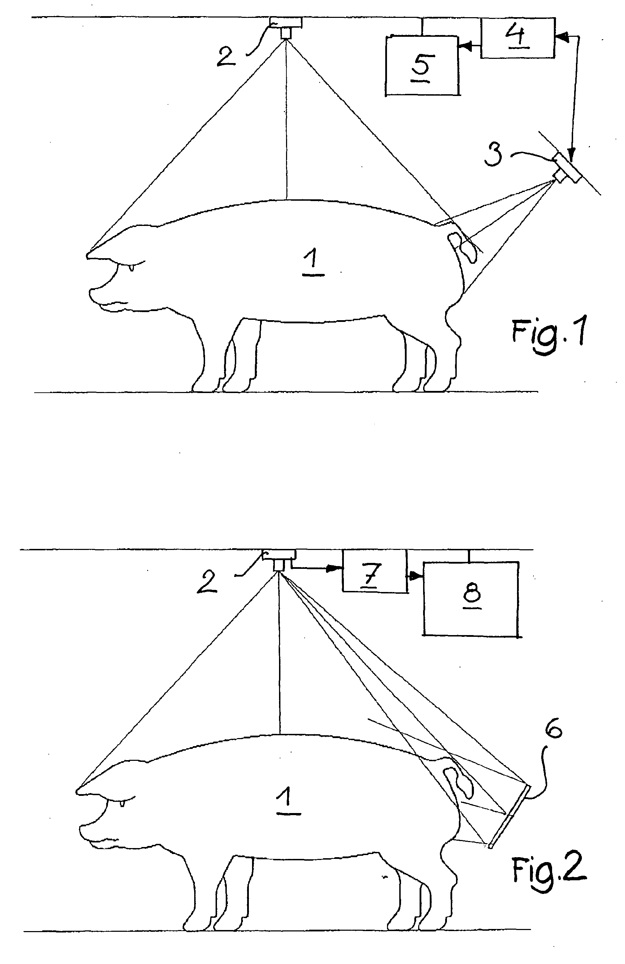

In der in Fig. 2 dargestellten abgewandelten Ausführungsform wird die Sau 1 durch die Kamera 2 überwacht, indem diese mit einem passenden, auf das Hinterteil der Sau ausgerichteten Spiegel 6 zusammenwirkt und hierüber einen Bildteil einfängt, der dem in der Ausführungsform gemäß Fig. 1 über die Kamera 3 gewonnenen Bild entspricht. Hier ist dann die Kamera 2 mit einer Bildauswertung 7 zu verbinden, die ihrerseits an verschiedene Wiedergabeeinrichtungen wie einem Bildschirmgerät 8 angeschlossen ist.

Die Sau 1 nach Fig. 1 und 2 ist frei beweglich dargestellt, was die Aufnahmetechnik komplizieren kann, wenngleich die Bildauswertung auch die Ausrichtung und den Kameraabstand des Tieres überwachen und teilweise korrigieren kann. Vereinfachungen ergeben sich aber dann, wenn die Tiere beispielsweise auf dem Weg zur Fütterungsstelle eine Schleuse, ein Tor oder einen Gang in einer bestimmten Ausrichtung und Position passieren oder aber einen festen Steh- oder Liegeplatz im Stall einnehmen oder aber bei der Fütterung in einer, wiederkehrenden Stellung anzutreffen sind.

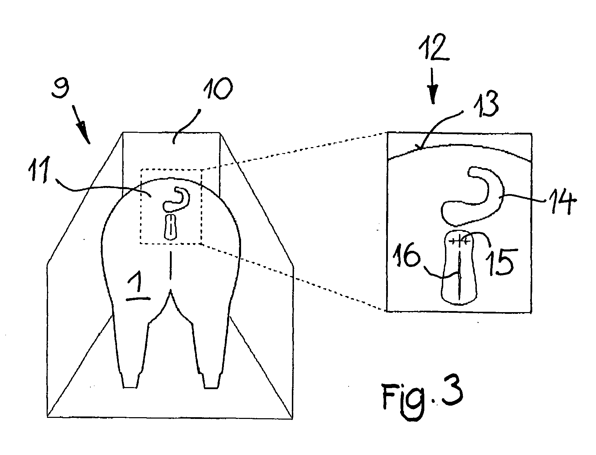

In Fig. 3 ist die Sau 1 in einer schematisch wiedergegebenen Schleuse 9 dargestellt, die mit einer Stirnwand 10 einen Halt des Tieres erzwingt, wobei diese Stirnwand 10 als Pforte ausgebildet ist, um danach die Weiterbewegung des Tieres freizugeben. In der Schleuse 9 kann das Tier opto-elektronisch überwacht und auch identifiziert werden. Die Identifizierung ist in der Regel notwendig, um Tiere in der Gruppenhaltung zu erkennen und aus der Gruppe bedarfsweise herausnehmen zu können, sei es zum Belegen, zum Abferkeln oder zum Separieren bei Krankheiten. Die Identifikation kann mit erprobten herkömmlichen Mitteln erfolgen, beispielsweise durch Markierungen, insbesondere Ohrmarkierungen, die auf elektromagnetische Sendesignale antworten. Es ist aber auch möglich, die Identifizierung auf opto-elektronische Weise mit dem Überwachungsgerät oder mit gesonderten Geräten durchzuführen, wenn die Tiere von Natur aus optisch gut unterscheidbar sind oder wenn die Tiere eine geeignete farbliche und/oder graphische Kennzeichnung erhalten.

Während bei frei beweglichen Tieren besondere Maßnahmen zur Kameraführung und -ausrichtung erforderlich werden können oder auch eine Ausrichtung der Kamera als Überwachungsgerät von Hand nötig werden kann, ergibt sich in einer Schleuse 9 die Ausrichtung des Tieres, die Ausrichtung des Bildes und der Kameraabstand zwangsläufig. Mit der Ausrichtung des Überwachungsgeräts gemäß Fig. 1 und 2 wird beispielsweise ein Bildausschnitt 11 erzielt, der den Schwanz und die hinteren Körperöffnungen der Sau wiedergibt. Ein leicht vergrößert in Fig. 3 dargestelltes Bild 12 zeigt neben der Rückenkontur 13 der Sau einen (beschnittenen) Schwanz 14, einen After 15 und eine Vulva 16, deren Grundabstände auch bei Aufnahme innerhalb einer Schleuse wie der Schleuse 9 in der Bildauswertung erforderlichenfalls noch überwacht und korrigiert werden könnte.

Im allgemeinen ist das Bild 12 aber bereits aussagekräftig in Bezug auf Schwellungen, Rötungen, Verletzungen, besondere Ausscheidungen wie krankheitsbedingter Kot, Schleim oder Abortausscheidungen. Die Bildauswertung wie etwa die Bildauswertung 4 in Fig. 1 oder die Bildauswertung 7 in Fig. 2 sind dann in der Lage, laufende Überwachungsmeldungen zu geben und insbesondere Anzeichen über Alarmgeräte oder auf einem Bildschirmgerät zu signalisieren, damit notwendige Maßnahmen frühzeitig getroffen werden.

Eine solche Überwachungseinrichtung schafft eine erhebliche Entlastung des Züchters und liefert erhöhte Sicherheiten gegen Versäumnisse bei der Zucht, die insbesondere bei der Tierhaltung in großen Zahlen leicht eintreten können.

## Patentansprüche

1. Überwachungseinrichtung für Tiere, insbesondere Nutztiere, mit einem ein einzelnes Tier (1) erfassenden und mit einer Bildauswertung (4,7) verbundenen opto-elektronischen Überwachungsgerät (2,3), **dadurch gekennzeichnet, daß** das Überwachungsgerät (2,3) zumindest ein vorgegebenes Oberflächenmerkmal (14,15,16) des Tieres (1) erfaßt, das in der Bildauswertung bewertet wird.

2. Überwachungseinrichtung nach Anspruch 1, **dadurch gekennzeichnet, daß** das Oberflächenmerkmal eine Hautpartie ist.

3. Überwachungseinrichtung nach Anspruch 1, **dadurch gekennzeichnet, daß** das Oberflächenmerkmal eine Körperöffnung (15,16) am Hinterteil des Tieres ist.

4. Überwachungseinrichtung nach Anspruch 1, **dadurch gekennzeichnet, daß** das Oberflächenmerkmal ein Teil des Kopfes ist.

5. Überwachungseinrichtung nach einem der Ansprüche 1 bis 4, **dadurch gekennzeichnet, daß** die Bildauswertung (4,7) einen Bildspeicher zur Ermittlung von bildlichen Veränderungen aufweist.

6. Überwachungseinrichtung nach einem der Ansprüche 1 bis 5, **dadurch gekennzeichnet, daß** die Bildauswertung Oberflächenmerkmale zur Identifizierung des Tieres erfaßt und auswertet.

7. Überwachungseinrichtung nach einem der Ansprüche 1 bis 6, **dadurch gekennzeichnet, daß** das Überwachungsgerät (2,3) das Tier (1) in einer Bilderfolge erfaßt und diese der Bildauswertung (4,7) zuleitet.

8. Überwachungseinrichtung nach einem der Ansprüche 1 bis 7, **dadurch gekennzeichnet, daß** sie mit einer Identifikationseinrichtung verbunden ist.

9. Überwachungseinrichtung nach einem der Ansprüche 1 bis 8, **dadurch gekennzeichnet, daß** dem Überwachungsgerät eine Station (9) zugeordnet ist.

10. Überwachungseinrichtung nach Anspruch 9, **dadurch gekennzeichnet, daß** die Station als Schleuse (9) ausgebildet ist.

11. Überwachungseinrichtung nach Anspruch 9, **dadurch gekennzeichnet, daß** die Station als Gang ausgebildet ist.

12. Überwachungseinrichtung nach einem Anspruch 9, **dadurch gekennzeichnet, daß** die Station als Futterplatz ausgebildet ist.

13. Überwachungsverfahren für Tiere, insbesondere Nutztiere, bei dem jeweils ein einzelnes Tier (1) mit zumindest einem opto-elektronischen Überwachungsgerät (2,3) aufgenommen wird, dessen Aufnahme einer Bildauswertung (4,7) zugeführt wird, **dadurch gekennzeichnet, daß** die Aufnahme zumindest ein vorgegebenes Oberflächenmerkmal erfaßt, das in der Bildauswertung (4,7) bewertet wird.

14. Verfahren nach Anspruch 13, **dadurch gekennzeichnet, daß** die Bildauswertung (4,7) anhand von zumindest einer in zeitlichem Abstand vorher vorgenommenen und abgespeicherten Aufnahme bildliche Änderungen ermittelt.

15. Verfahren nach Anspruch 13, **dadurch gekennzeichnet, daß** die Aufnahme als Bilderfolge erfolgt, die der Bildauswertung zur Überwachung der Tierbewegung zugeleitet wird.

16. Verfahren nach Anspruch 13, **dadurch gekennzeichnet, daß** die Bildauswertung anhand von vorgegebenen Meßdaten erfolgt.
